# EUROPÄISCHE PATENTANMELDUNG

(11) **EP 1 152 587 A1**
(43) Veröffentlichungstag der Anmeldung: **07.11.2001**
(21) Anmeldenummer: 00109457.2
(22) Anmeldetag: 03.05.2000
(51) Int. Cl.: H04M 7/00, H04M 3/42, H04L 12/66

(54) **Verfahren für Internet-Benutzer die mittels PC mit jedem beliebigen öffentlichen Teilnehmer telephonieren können**

(71) Anmelder: SIEMENS AKTIENGESELLSCHAFT, 80333 München (DE)
(72) Erfinder: Zygan-Maus, Renate, 81477 München (DE); Mitreuter, Ulrich, 82547 Eurasburg (DE); Unger, Stefan, 82008 Unterhaching (DE)

(57) **Zusammenfassung**

Die Erfindung ermöglicht auf einfache Weise, dass ein Telefonkunde, der mit seinem Personal Computer (PC) eine IP-basierte Verbindung zum Internet hält, über diese Internetverbindung z.B. auch telefonieren kann, und zwar zu jedem beliebigen öffentlichen Teilnehmer.

## Beschreibung

1.Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Worin liegt eine Besonderheit der Erfindung?

### Zu Punkt 1:

Es soll möglich sein, dass ein Telefonkunde, der mit seinem Personal Computer (PC) eine IP-basierte Verbindung zum Internet hält, über diese Internetverbindung z.B. auch telefonieren kann, und zwar zu jedem beliebigen öffentlichen Teilnehmer und auf seine Kosten.

### Zu Punkt 2: Wie wurde dieses Problem bisher gelöst?

Bei den bisher bekannten Lösungsansätzen wird der Rufaufbau über standardisierte Protokolle für IP-Telefonie (H.323 oder SIP) vom PC des Nutzers gestartet. Für die Identifizierung, Authentisierung und Autorisierung des Nutzers, für die Rufsteuerung und für die Vergebührung werden IP-Telefonie-spezifische Serverfunktionen benötigt (zusätzlich zu den in jedem Fall notwendigen Mediagateway-Funktionen für die Umsetzung der Sprachinformationen vom TDM-Format in IP-Pakete und umgekehrt).

### Zu Punkt 3: In welcher Weise löst Ihre Erfindung das angegebene technische Problem (geben Sie Vorteile an)?

Nach dem erfindungsgemäßen Verfahren werden Funktionen des Telefonnetzes wiederverwendet, um einem Internet-Nutzer mithilfe des Telefonnetzes zusätzliche Dienste (z.B. den Telefonie-Dienst) bereitzustellen, für deren Ausführung auch Dienst-Protokolle des Internet benötigt werden.

Im folgenden wird das erfindungsgemäßen Verfahren anhand eines bekannten Dienstes , nämlich des Dienstes "Click-to-Dial (CtD)" beispielhaft beschrieben:

Standardmäßig wird CtD verwendet, um zu Lasten eines CtD Kunden beliebigen anonymen Nutzern eine PSTN-Sprechverbindung zu ermöglichen, die sie über ein HTTP Interface initiieren können.

Bei der Anwendung in dem erfindungsgemäßen Verfahren steuert die CtD Nachricht (unter Verwendung des proprietär erweiterten standardisierten Protokolls PINT) einen IP-Telefonie-Call und authentifiziert den Nutzer. Der eigentliche Rufaufbau wird vollständig vom Telefonnetz aus gesteuert und dort vergebührt. Die VoIP-Verbindung zum PC des Nutzers wird vom Telefonnetz aus gestartet. IP-Telefonie-verbindungsspezifische Serverfunktionen für die Identifizierung, Authentisierung und Autorisierung des Nutzers, für die Rufsteuerung und für die Vergebührung werden nicht benötigt, stattdessen werden Funktionen des CtD Dienstes wiederverwendet.

Das erfindungsgemäße Verfahren kann von einem Telefonnetzbetreiber für alle seine Kunden eingesetzt werden, unabhängig davon an welcher Vermittlungsstelle sie angeschlossen sind und unabhängig davon, bei welchem Internet-Service-Provider sie ihren Internetzugang subskribiert haben. Zum Aufbau der VoIP Verbindung muß auf dem PC des Internet Teilnehmers VoIP fähige Software für ankommende Rufe (z.B. Microsoft Netmeeting) installiert sein.

Der Auftrag für einen Rufaufbau im PSTN ergeht an den Click-to-Dial Dienst mittels standardisiertem PINT Protokoll. Es ist eine Erweiterung des aktuellen PINT Protokolls, d.h. PINT+, erforderlich zum Transport der IP Adresse des Internet Teilnehmers

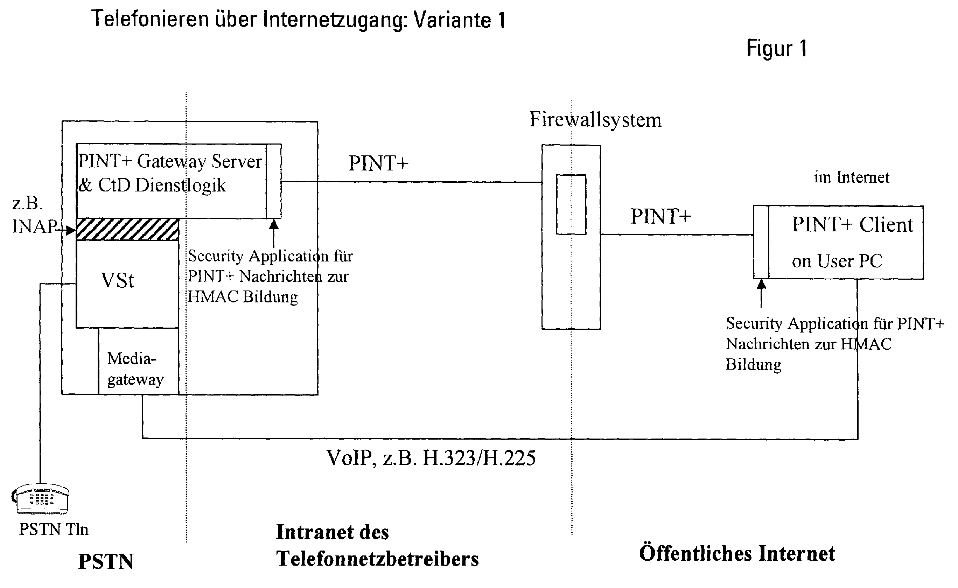

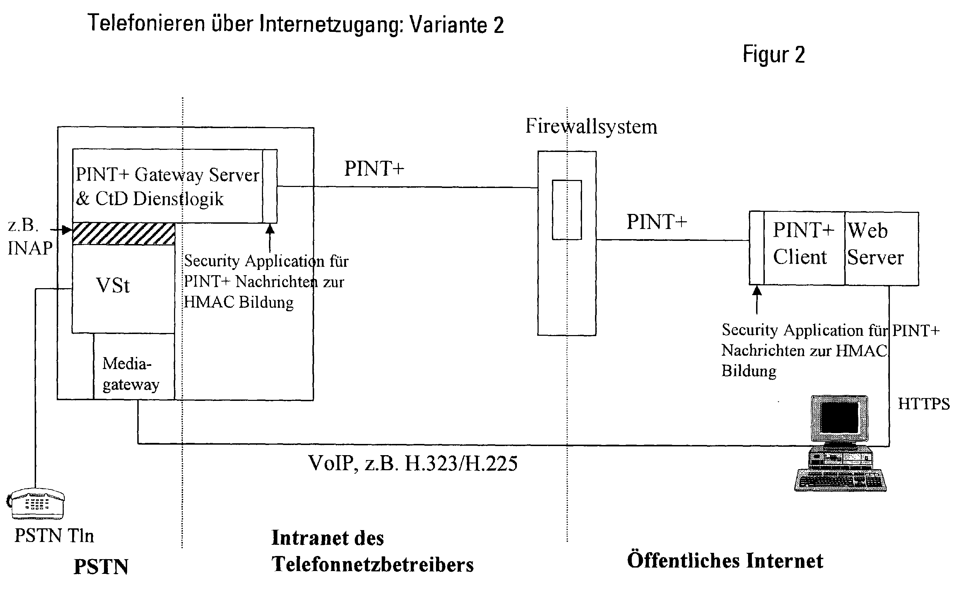

Im folgenden werden zwei Varianten des Beispiels näher erläutert (siehe Figuren 1 und 2):

Variante a): Die PINT+ Client Software (siehe Note) befindet sich auf dem Endgerät (z.B. PC) des Internet Teilnehmers (siehe Figur 1).

Der Internet Teilnehmer subskribiert den Zusatz-Dienst bei seinem Telefonnetzbetreiber. Im Gegensatz zum Standard CtD-Dienst benötigt der Internet Teilnehmer spezielle Software (PINT+ Client SW) auf seinem PC, die ihm der Betreiber zur Verfügung stellt.

Authentisierung des Internet Teilnehmers erfolgt auf Basis eines Passwort. Der Betreiber teilt dem Internet Teilnehmer einen Defaultwert für sein Passwort und eine 4-stellige Zufallszahl mit. Die Datenbank des Telefonnetzbetreibers, die die Passwörter der Internet Teilnehmer enthält, speichert das Default-Passwort in verschlüsselter Form ab: Es wird die 4-stellige Zufallszahl an das Default-Passwort angehängt und über diesen Wert wird ein SHA-1 Hashwert gebildet. Dieser Hashwert (= verschlüsseltes Passwort) wird zusammen mit der Zufallszahl und der Länge des unverschlüsselten Passwortes (4-12 Ziffern) in der Teilnehmerdatenbank abgespeichert. Die Zufallszahl bleibt im weiteren während der Subskription des Dienstes konstant, auch wenn der Internet Teilnehmer sein Passwort ändert.

Während der Installation der PINT+ Client Software wird der Internet Teilnehmer aufgefordert, seine Rufnummer und die Zufallszahl einzugeben. Diese wird vom Programm gespeichert und zur Generierung des verschlüsselten Passwortes wie oben verwendet. Nach der Installation verwendet der Internet Teilnehmer seinen Standard-HTTP-Browser zur Änderung des Default-Passwortes über ein HTTPS-Interface seines Telefonnetzbetreibers.

Möchte der Internet Teilnehmer über seinen Internetzugang telefonieren, startet er die PINT+ Client Software, gibt die Nummer, die er anrufen möchte ein und wird aufgefordert, sein Passwort anzugeben. Die PINT+ Client Software bildet eine PINT+ Nachricht mit den Verbindungsdaten (Rufnummern der zu verbindenden Teilnehmer, IP-Adresse des Subscribers) und sendet sie über IP/UDP zu einem PINT+ Gateway Server mit Click-to-Dial Dienstlogik des Telefonnetzbetreibers. Die PINT+ Nachricht enthält einen HMAC Authentikator, der mit Hilfe des verschlüsselten Passwortes gebildet wurde und erlaubt, das PINT+ Packet zu authentifizieren und die Datenunversehrtheit festzustellen. Dazu bildet die Click-to-Dial Dienstlogik ebenfalls den HMAC Authentikator der PINT+ Nachricht unter Verwendung des in der Teilnehmerdatenbank gespeicherten verschlüsselten Passwortes und vergleicht diesen mit dem empfangenen HMAC Authentikator.

Die Click-to-Dial Dienstlogik initiiert mittels eines Call Control Protokolls (z.B. INAP) einen Rufaufbau im Telefonnetz zwischen den beiden im PINT+ Paket angebenen Rufnummern. Dabei wird zum Internet Teilnehmer über ein Mediagateway eine VoIP-Verbindung aufgebaut, die dazu benötigte IP-Adresse des Internet Teilnehmers wird dem PINT+ Paket entnommen. Der Aufbau der IP-Telefonie-Verbindung kann entweder über eine Siemens Interworking Unit (proprietäre Übermittlung der IP-Adresse) oder ein beliebiges Mediagateway erfolgen (in diesem Fall speichert der PINT+ Gateway Server die IP Adresse. Er ist dem Mediagateway als Gatekeeper bekannt und wird von diesem nach der IP Adresse abgefragt). Für den Internet Teilnehmer ist dies ein ankommender VoIP-Ruf, der ihm durch seine VoIP-Applikation (z.B. Microsoft Netmeeting) zugestellt wird. Die Verbindung zum gewählten Teilnehmer wird normal über das PSTN aufgebaut und durch den CtD Dienst werden beide Verbindungen miteinander verknüpft.

Variante b): Die PINT+ Client Software befindet sich auf einem Webserver im Internet (siehe Figur 2).

Der Internet Teilnehmer subskribiert den Zusatz-Dienst bei seinem Telefonnetzbetreiber. Die Authentisierung des Internet Teilnehmers erfolgt auf Basis eines Passworts. Der Betreiber teilt dem Internet Teilnehmer einen Defaultwert für sein Passwort und eine 4-stellige Zufallszahl sowie eine Web-Page mit, auf der er sein Passwort ändern kann. Die Speicherung des verschlüsselten Passwortes in der Teilnehmerdatenbank und die Passwortänderung erfolgt wie oben.

Möchte der Internet Teilnehmer telefonieren, besucht er mit dem Standard-HTTP-Browser seines Endgerätes (z.B. PC ) eine HTTPS Webpage seines Telefonnetzbetreibers, die dieser für den IP-Telefonie-Dienst eingerichtet hat. Der Internet Teilnehmer wird aufgefordert, sein Passwort (und bei der ersten Nutzung des Dienstes auch die Zufallszahl) einzugeben. Der Webserver schreibt die Zufallszahl dann mittels eines Coockies auf den PC des Internet Teilnehmers, damit muß dieser in Zukunft die Zufallszahl (die kein Geheimnis darstellt) nicht mehr zusammen mit dem Paßwort eingeben.

Der Internet Teilnehmer gibt nun die anzurufende Telefonnummer ( und bei der ersten Nutzung des Dienstes seine Rufnummer) ein, die PINT+ Client Software bildet eine PINT+ Nachricht einschließlich eines Authentikators für den Nutzer und sendet diese über IP/UDP zu einem PINT+ Gateway Server mit Click-to-Dial Dienstlogik des Telefonnetzbetreibers. Die Rufnummer des Nutzers wird ebenfalls mittels eines Coockie auf den PC des Nutzers geschrieben und ist deshalb dem PINT+ Client bei späteren Nutzungen des Dienstes bekannt. Der weitere Rufaubau zwischen beiden Teilnehmern erfolgt durch die Click-to-Dial Dienstlogik wie in Variante a).

Note: Der Auftrag für einen Rufaufbau im PSTN ergeht an den Click-to-Dial Dienst mittels standardisiertem PINT Protokoll. Es ist eine Erweiterung des aktuellen PINT Protokolls, d.h. PINT+, erforderlich zum Transport der IP Adresse des Internet Teilnehmers.

### Vorteile:

- Durch das beschriebene Verfahren kann ein Telefonnetzbetreiber allen seinen Kunden das Telefonieren über eine Internetverbindung als einen (Internet)Zusatzdienst anbieten. Seine Investitionskosten werden dadurch minimiert, dass andere Funktionen des Telefonnetzes wiederverwendet werden.
- Es ist keine VoIP-spezifische Infrastruktur erforderlich, z.B. kein H.323 Gatekeeper, und keine VoIP-spezifische Subskription des Internet Teilnehmers. Der Internet Teilnehmer nutzt seine bekannte Geschäftsbeziehung zum Telefonnetzbetreiber auch für den IP-Telefonie-Dienst, d.h. Abrechnung vom normalen Telefondienst und IP-Telefonie-Dienst erfolgt über eine gemeinsame Abrechnung.
- Es ist möglich, andere Internet-Zusatzdienste mit derselben Datenbasis für die Nutzer-Authentifizierung anzubieten.

### Zu Punkt 4:

Eine Besonderheit der Erfindung liegt in der Konzeption eines einfachen Verfahrens für das Bereitstellen eines Zusatz-Dienstes über einen Internetzugang, welches Teile von standardisierten Verfahren (H.323-, PINT-, HMAC- Prozeduren) verwendet, diese geringfügig um zusätzliche Funktionen ergänzt, und sie so kombiniert, dass ein wirtschaftlicher Einsatz als Telekommunikationszusatzdienst für einen Telefonnetzbetreiber möglich wird.

### Referenzen:

- PINT:: standardisiert in der IETF (Internet Engineering Task Force), Status: Proposed Standard RFC
- HMAC:: standardisiert in der IETF: RFC 2104
- SHA-1:: standardisiert vom National Bureau of Standards, NBS FIPS PUB 113 "Computer Data Authentication"

### Abkürzungen:

- IP: Internet Protokoll(e)
- VoIP: Voive over IP
- PC:: Personal Computer
- PSTN: Public Switched Telephone Network
- PINT: PSTN/Internet Interworking
- PINT+:: Erweiterung des aktuellen PINT Protokolls

## Patentansprüche

1. Verfahren zum Bereitstellen eines Zusatz-Dienstes für Internet-Benutzer, demgemäß
- von einem Internet-Benutzer, der sich mithilfe eines Endgerätes in einer IP-basierten Verbindung befindet, aus dieser IP-basierten Verbindung heraus ein Zusatz-Dienst angefordert wird,
- der genannte Zusatz-Dienst angefordert wird, indem ein Telefonnetz mit einer entsprechenden Gateway-Komponente beauftragt wird, den Zusatz-Dienst durchzuführen,
- die für den Zusatz-Dienst benötigte Verbindung zu dem Endgerät des Internet-Benutzers von dem Telefonnetz unter Verwendung eines auf dem Internet-Protokoll basierenden Dienst-Protokolls aufgebaut und gesteuert wird.

2. Verfahren nach Anspruch 1,
**dadurch gekennzeichnet, daß**
es sich bei dem genannten angeforderten Zusatz-Dienst um den Telefonie-Dienst handelt und bei dem genannten Dienst-Protokoll um ein Voice-over-IP-Protokoll.

3. Verfahren nach Anspruch 1 oder 2
**dadurch gekennzeichnet, daß**
die genannte Beauftragung von dem genannten Endgerät selbst durchgeführt wird.

4. Verfahren nach Anspruch 1 oder 2
**dadurch gekennzeichnet, daß**
für die genannte Beauftragung von dem genannten Endgerät ein Web Server benutzt wird.

5. Verfahren nach einem der Ansprüche 1 bis 4,
**dadurch gekennzeichnet, daß**
für die genannten Beauftragung das PINT-Protokoll benutzt wird, wobei das PINT-Protokoll hierzu um die Eigenschaft der Übermittlung der IP-Adresse des den Zusatz-Dienst anfordernden Benutzers erweitert wird.

6. Verfahren nach einem der Ansprüche 1 bis 5,
**dadurch gekennzeichnet, daß**
von der Gateway-Komponente eine Click-to-Dial-Dienstlogik verwendet wird, um den Verbindungsaufbau, der durch das Telefonnetz durchgeführt wird, zu initiieren.

7. Verfahren nach einem der Ansprüche 1 bis 6,
**dadurch gekennzeichnet, daß**
die Kommunikaton der Gateway-Komponente mit dem Telefonnetz über das Applikations-Protokoll des Intelligenten Netzes (INAP) durchgeführt wird.

8. Verfahren nach einem der Ansprüche 1 bis 7,
**dadurch gekennzeichnet, daß**
die Vergebührung des genannten angeforderten Zusatz-Dienstes von dem Telefonnetz gesteuert wird.
